# FASCICULE DE BREVET EUROPEEN

(11) **EP 3 898 264 B1**
(45) Date de publication et mention de la délivrance du brevet: **12.07.2023**
(21) Numéro de dépôt: 19845764.0
(22) Date de dépôt: 13.12.2019
(51) Int. Cl.: B60C 1/00, C08L 17/00, C08L 19/00, C08L 53/02

(54) **PNEUMATIQUE COMPRENANT UNE COMPOSITION DE CAOUTCHOUC COMPRENANT UN ELASTOMERE THERMOPLASTIQUE ET UNE POUDRETTE DE CAOUTCHOUC**
REIFEN MIT EINER KAUTSCHUKZUSAMMENSETZUNG MIT EINEM THERMOPLASTISCHEN ELASTOMER UND EINEM GUMMIGRANULAT
TYRE HAVING A RUBBER COMPOSITION COMPRISING A THERMOPLASTIC ELASTOMER AND A RUBBER CRUMB

(30) Priorité: 19.12.2018 FR 1873398; 30.01.2019 FR 1900829
(43) Date de publication de la demande: 27.10.2021
(73) Titulaire: COMPAGNIE GENERALE DES ETABLISSEMENTS MICHELIN, 63000 Clermont-Ferrand (FR)
(72) Inventeur: LALLET, François, 63040 CLERMONT-FERRAND CEDEX 9 (FR); MERINO LOPEZ, José, 63040 CLERMONT-FERRAND CEDEX 9 (FR); PIALOT, Frédéric, 63040 CLERMONT-FERRAND CEDEX 9 (FR); PRAS, Maxime, 63040 CLERMONT-FERRAND CEDEX 9 (FR)
(74) Mandataire: Gandon-Pain, Sylvie
(86) Numéro de dépôt international: PCT/FR2019/053065
(87) Numéro de publication internationale: WO 2020/128257

(56) Documents cités:
- WO-A1-2018/204575
- FR-A1- 3 060 586
- US-B1- 6 479 558

## Description

L'invention est relative aux pneumatiques comprenant au moins une composition de caoutchouc comprenant une poudrette de caoutchouc.

En effet, il est intéressant aujourd'hui pour les industriels du pneumatique de trouver des solutions pour baisser les coûts des compositions de caoutchouc sans pénaliser les performances des pneumatiques utilisant ces compositions.

Il est également d'intérêt pour les industriels de favoriser le recyclage des pneumatiques en fin de vie dans des pneumatiques neufs dans l'optique de diminuer l'impact environnemental de leur activité.

Le broyage ou la micronisation de compositions de caoutchouc vulcanisées produit des granulés ou particules qu'on appelle généralement poudrettes de caoutchouc (« rubber crumbs » en anglais).

Dans ce contexte, il est connu dans l'état de l'art que les poudrettes de caoutchouc peuvent être utilisées en pneumatique. Par exemple, le document WO2018/115715 propose d'utiliser en flanc de pneumatique des compositions qui peuvent comprendre 23 pce, ou 30 pce, ou jusqu'à 50 pce ou 54 pce de poudrettes diverses. Ces quantités correspondent à des pourcentages massiques inférieurs à 25% en masse dans les compositions. Il est également connu dans le document WO2010/039327 que des compositions pour pneumatiques peuvent également être préparées à partir de mélanges maîtres (« masterbatch » en anglais) comprendre jusqu'à 50% en masse de poudrette. Ces documents décrivent des mélanges de poudrette avec des élastomères diéniques.

A présent, la Demanderesse a montré que des quantités de poudrette très élevées pouvaient également être utilisées au sein des compositions pour pneumatiques, en association avec des élastomères thermoplastiques. En particulier, la Demanderesse a trouvé un moyen d'obtenir d'excellentes propriétés d'hystérèse et donc de résistance au roulement dans des compositions comprenant un élastomère thermoplastique, et 50% en masse ou plus de poudrette spécifique.

L'invention concerne donc un pneumatique comprenant une composition de caoutchouc à base d'au moins une poudrette de caoutchouc et un élastomère thermoplastique ladite poudrette de caoutchouc représentant 50% en masse ou plus de la composition, et présentant un ratio de l'extrait chloroformique sur l'extrait acétonique inférieur à 2 ; les extraits chloroformique et acétonique étant exprimés en pourcentages massiques.

Préférentiellement, le pneumatique selon l'invention sera choisi parmi les pneumatiques destinés à équiper un véhicule à deux roues, un véhicule de tourisme, ou encore un véhicule dit « poids lourd » (c'est-à-dire métro, bus, véhicules hors-la-route, engins de transport routier tels que camions, tracteurs, remorques), ou encore des avions, des engins de génie civil, agraire, ou de manutention.

### Constituants de la composition

Les compositions de caoutchouc pour le pneumatique selon l'invention sont à base d'au moins une poudrette de caoutchouc et un élastomère thermoplastique ladite poudrette de caoutchouc représentant 50% en masse ou plus de la composition, et présentant un ratio de l'extrait chloroformique sur l'extrait acétonique inférieur à 2 ; les extraits chloroformique et acétonique étant exprimés en pourcentages massiques.

Par l'expression «composition à base de» il faut entendre une composition comportant le mélange et/ou le produit de réaction in situ des différents constituants de base utilisés, certains de ces constituants pouvant réagir et/ou étant destinés à réagir entre eux, au moins partiellement, lors des différentes phases de fabrication de la composition, ou lors de la cuisson ultérieure, modifiant la composition telle qu'elle est préparée au départ. Ainsi les compositions telles que mises en oeuvre pour l'invention peuvent être différentes à l'état non réticulé et à l'état réticulé.

Par ailleurs, le terme « pce », bien connu de l'homme de l'art, signifie au sens de la présente demande de brevet, partie en poids pour cent parties d'élastomères, au sens de la préparation de la composition avant cuisson. C'est-à-dire, dans le cas de la présence d'une poudrette de caoutchouc dans une composition, que le terme « pce » signifie partie en poids pour cent parties d'élastomères « neufs », excluant donc de la base 100 les élastomères contenus dans la poudrette de caoutchouc. Bien sûr, la poudrette elle-même présente une composition de caoutchouc dont les ingrédients peuvent également être exprimés en pce, le terme pce désignant dans ce cas la quantité en parties en poids pour cent parties d'élastomères, au sens de la composition propre de la poudrette.

Dans la présente description, sauf indication expresse différente, tous les pourcentages (%) indiqués sont des pourcentages en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

### Poudrette de caoutchouc

La composition de l'invention comporte également une poudrette de caoutchouc (en abrégé « poudrette » dans ce qui suit).

Les poudrettes se présentent sous la forme de granulés (ou granulats), éventuellement mis sous forme d'une plaque de caoutchouc. Le plus souvent les poudrettes de caoutchouc sont issues d'un broyage ou d'une micronisation de compositions de caoutchouc cuites déjà utilisées pour une première application, par exemple en pneumatique, elles sont un produit de recyclage des matériaux. De préférence les poudrettes se présentent sous la forme de microparticules.

Par « microparticules » on entend des particules qui présentent une taille, à savoir leur diamètre dans le cas de particules sphériques ou leur plus grande dimension dans le cas de particules anisotropes, de quelques dizaines ou centaines de microns.

Les poudrettes sont usuellement constituées d'une composition à base d'un élastomère et d'une charge. Elles comprennent également usuellement tous les ingrédients utilisés dans les compositions de caoutchouc tels que les plastifiants, les antioxydants, les additifs de vulcanisations etc.

Les poudrettes peuvent être de simples broyats / micronisats de caoutchouc, sans autre traitement. Il est également connu que ces poudrettes peuvent subir un traitement afin de les modifier. Ce traitement peut consister à une modification chimique de fonctionnalisation ou de dévulcanisation. Il peut aussi s'agir d'un traitement thermomécanique, thermochimique, biologique...

En fonction des constituants des poudrettes et du traitement qu'elles peuvent avoir subi, elles présentent habituellement un extrait acétonique compris entre 3 et 30 % en masse, et un extrait chloroformique compris entre 5 et 85% en masse.

Dans certains documents, il a été décrit l'utilisation de poudrettes particulières, dites « régénérées » (« reclaimed rubber crumbs » en anglais), qui présentent une morphologie modifiée par traitement thermique et/ou mécanique, et/ou biologique et/ou chimique. Ces poudrettes régénérées présentent généralement un extrait acétonique compris entre 5 et 20 % en masse, et un extrait chloroformique compris entre 15 et 85% en masse, ce dernier présentant une masse moléculaire moyenne en masse (Mw) supérieure à 10000 g/mol. Dans les poudrettes régénérées, le ratio de l'extrait chloroformique sur l'extrait acétonique, exprimés en pourcentage en masse, est généralement supérieur ou égal à 2. Enfin, les poudrettes régénérées présentent une viscosité Mooney (exprimée de manière conventionnelle en unité Mooney, UM) généralement comprise entre 40 et 90. Ces poudrettes régénérées, si elles présentent certains avantages connus, résultent d'un traitement particulier qui entraine un surcoût du produit et des caractéristiques techniques entraînant d'autres propriétés que les poudrettes qui n'ont pas subi un tel traitement.

Comme exemples de telles poudrettes régénérées, on peut citer les produits du commerce « Wuxi fine reclaim », qui présente un taux d'extrait acétonique de 9% et un taux d'extrait chloroformique de 37,2% ; ou « Nantong HT tire reclaim », qui présente un taux d'extrait acétonique de 12,7% et un taux d'extrait chloroformique de 28,3%.

Pour les besoins de l'invention, on choisira une poudrette spécifique, qui présente un ratio de l'extrait chloroformique sur l'extrait acétonique inférieur à 2, et de préférence inférieur ou égal à 1,5 ; les extraits chloroformique et acétonique étant exprimés en pourcentages massiques.

De préférence, la poudrette présente un extrait acétonique compris entre 3 et 15 % en masse, plus préférentiellement compris dans un domaine allant de 3 à 10 % en masse.

Egalement, on préfère que la poudrette présente un extrait chloroformique compris entre 3 et 20% en masse, plus préférentiellement compris dans un domaine allant de 5 à 15 % en masse.

Préférentiellement, l'extrait chloroformique de la poudrette de caoutchouc présente une masse moléculaire moyenne en masse (Mw) inférieure à 10000 g/mol, de préférence inférieure à 8000 g/mol.

De préférence également, la poudrette présente une taille moyenne de particules (D50) comprise entre 10 et 400 µm, préférentiellement entre 50 et 250 µm et plus préférentiellement entre 70 et 220 µm.

Préférentiellement pour l'invention, la poudrette qui n'a pas subi de modification par traitement thermique et/ou mécanique, et/ou biologique et/ou chimique.

De manière préférentielle, la poudrette utile à l'invention comprend un élastomère diénique. Cet élastomère représente préférentiellement au moins 30% en masse de la poudrette, pourcentage déterminé selon la norme ASTM E1131. Il est choisi préférentiellement dans le groupe constitué par les polybutadiènes, les polyisoprènes y compris le caoutchouc naturel, les copolymères de butadiène et les copolymères d'isoprène. Plus préférentiellement le taux molaire de motifs d'origine diénique (diènes conjugués) présent dans l'élastomère diénique est supérieur à 50%, de préférence entre 50% et 70%.

De préférence pour l'invention, la poudrette contient entre 5 et 70% en masse de charge, plus préférentiellement entre 10% et 60%, et très préférentiellement entre 15% et 50%.

Par charge, on entend ici tout type de charge, qu'elle soit renforçante (typiquement à particules nanométriques, et préférentiellement de taille moyenne en poids inférieure à 500 nm, notamment entre 20 et 200 nm) ou qu'elle soit non-renforçante ou inerte (typiquement à particules micrométriques, et préférentiellement de taille moyenne en poids supérieure à 1 µm, par exemple entre 2 et 200 µm). La taille moyenne en poids des particules nanométriques est mesurée de manière bien connue de l'homme du métier (à titre d'exemple, selon la demande WO2009/083160 paragraphe 1.1). La taille moyenne en poids des particules micrométriques peut être déterminée par tamisage mécanique.

A titre d'exemples de charges connues comme renforçantes par l'homme du métier, on citera notamment du noir de carbone ou une charge inorganique renforçante telle que la silice ou l'alumine en présence d'un agent de couplage, ou leurs mélanges.

Selon un mode de réalisation préférentiel de l'invention, la poudrette comprend à titre de charge une charge renforçante, notamment un noir de carbone ou un mélange de noirs de carbone.

Le noir de carbone ou le mélange de noirs de carbone représente préférentiellement plus de 50%, plus préférentiellement plus de 80%, encore plus préférentiellement plus de 90% en masse du poids de la charge renforçante de la poudrette. Selon un mode de réalisation davantage préférentiel, la charge renforçante est constituée d'un noir de carbone ou d'un mélange de noirs de carbone.

De manière très préférentielle, le noir de carbone est présent dans la poudrette à un taux allant de 20 à 40% en masse, plus préférentiellement de 25 à 35% en masse.

Comme noirs de carbone conviennent tous les noirs de carbone, notamment les noirs du type HAF, ISAF, SAF, FF, FEF, GPF et SRF conventionnellement utilisés dans les compositions de caoutchouc pour pneumatiques (noirs dits de grade pneumatique).

La poudrette peut contenir tous les autres additifs usuels qui entrent dans une composition de caoutchouc, notamment pour pneumatique. Parmi ces additifs usuels on peut citer les plastifiants liquides ou solides, les charges non renforçantes telles que la craie, le kaolin, les agents de protection et les agents de réticulation. Ces additifs peuvent se trouver dans la poudrette aussi sous la forme de résidu ou de dérivé, puisqu'ils ont pu réagir au cours des étapes de fabrication de la composition ou de réticulation de la composition à partir de laquelle est issue la poudrette. Dans les poudrettes utiles pour l'invention, le système de réticulation est préférentiellement un système de vulcanisation, c'est-à-dire à base de soufre (ou d'un agent donneur de soufre) et d'un accélérateur de vulcanisation.

Les poudrettes utiles pour l'invention, sont disponibles dans le commerce et l'homme du métier saura identifier les poudrettes utiles pour l'invention, notamment par l'analyse des extraits chloroformiques, acétoniques et leur ratio, tel que discuté plus haut. Conviennent pour l'invention les poudrettes « PD80 » de la société Lehigh Technologies, qui présente un taux d'extrait acétonique de 7% et un taux d'extrait chloroformique de 7,3% ; ou « RNM60 » de la société Rubber Ressources, qui présente un taux d'extrait acétonique de 7,4% et un taux d'extrait chloroformique de 8,2%.

La poudrette elle-même, si elle n'est pas directement achetée dans le commerce, peut être obtenue selon les techniques connues de l'homme de l'art de broyage ou micronisation.

Le broyage peut être réalisé par différentes technologies, par exemple par procédé mécanique de broyage par une meule de type Kahl, ou encore par les technologies de micronisation cryogénique à impact qui permettent l'obtention de particules de faible taille sur des matériaux caoutchouc. Des équipements commerciaux tels que les broyeurs CUM150 de la société Netzsch ou CW250 de la société Alpine peuvent être utilisés.

Dans la composition du pneumatique de l'invention, la poudrette est présente à un taux de 50% en masse ou plus, de préférence à un taux compris dans un domaine allant de 50% à 95% en masse, préférentiellement de 60% à 90% et plus préférentiellement de 70% à 90%. En dessous de 50%, l'économie réalisée ne serait pas aussi intéressante.

### Elastomère thermoplastique

Les élastomères thermoplastiques (en abrégé « TPE ») allient les propriétés des polymères thermoplastiques et des élastomères. Ce sont des copolymères à blocs, constitués de blocs rigides, thermoplastiques, reliés à des blocs souples, élastomères.

L'élastomère thermoplastique utilisé pour la mise en oeuvre de l'invention est un copolymère à blocs dont la nature chimique des blocs thermoplastiques et élastomères peut varier.

La masse moléculaire moyenne en nombre (notée Mn) du TPE est préférentiellement comprise entre 30 000 et 500 000 g/mol, plus préférentiellement comprise entre 40 000 et 400 000 g/mol. En dessous des minima indiqués, la cohésion entre les chaînes d'élastomère du TPE, notamment en raison de sa dilution éventuelle (en présence d'une huile d'extension), risque d'être affectée ; d'autre part, une augmentation de la température d'usage risque d'affecter les propriétés mécaniques, notamment les propriétés à la rupture, avec pour conséquence une performance diminuée "à chaud". Par ailleurs, une masse Mn trop élevée peut être pénalisante pour la mise en oeuvre. Ainsi, on a constaté qu'une valeur comprise dans un domaine de 50 000 à 300 000 g/mol était particulièrement bien adaptée, notamment à une utilisation du TPE dans une composition pour pneumatique.

Pour les TPE styréniques, la masse moléculaire moyenne en nombre (Mn) de l'élastomère TPE est déterminée de manière connue, par chromatographie d'exclusion stérique (SEC). Par exemple dans le cas des élastomères thermoplastiques styréniques, l'échantillon est préalablement solubilisé dans du tétrahydrofuranne à une concentration d'environ 1 g/l ; puis la solution est filtrée sur filtre de porosité 0,45 µm avant injection. L'appareillage utilisé est une chaîne chromatographique « WATERS alliance ». Le solvant d'élution est le tétrahydrofuranne, le débit de 0,7 ml/min, la température du système de 35°C et la durée d'analyse de 90 min. On utilise un jeu de quatre colonnes WATERS en série, de dénominations commerciales « STYRAGEL » (« HMW7 », « HMW6E » et deux « HT6E »). Le volume injecté de la solution de l'échantillon de polymère est de 100 µl. Le détecteur est un réfractomètre différentiel « WATERS 2410 » et son logiciel associé d'exploitation des données chromatographiques est le système « WATERS MILLENIUM ». Les masses molaires moyennes calculées sont relatives à une courbe d'étalonnage réalisée avec des étalons de polystyrène. Les conditions sont adaptables par l'homme du métier.

La valeur de l'indice de polydispersité Ip (rappel : Ip = Mw/Mn avec Mw masse moléculaire moyenne en poids et Mn masse moléculaire moyenne en nombre) du TPE est de préférence inférieure à 3 ; plus préférentiellement inférieure à 2 et encore plus préférentiellement inférieure à 1,5.

De manière connue, les TPE présentent deux pics de température de transition vitreuse (Tg, mesurée selon ASTM D3418), la température la plus basse, étant relative à la partie élastomère du TPE, et la température la plus haute, étant relative à la partie thermoplastique du TPE. Ainsi, les blocs souples des TPE se définissent par une Tg inférieure à la température ambiante (25°C), tandis que les blocs rigides ont une Tg supérieure à 80°C.

Dans la présente demande, lorsqu'il est fait référence à la température de transition vitreuse du TPE, il s'agit de la Tg relative au bloc élastomère. Le TPE présente préférentiellement une température de transition vitreuse ("Tg") qui est préférentiellement inférieure ou égale à 25°C, plus préférentiellement inférieure ou égale à 10°C. Une valeur de Tg supérieure à ces minima peut diminuer les performances de la composition lors d'une utilisation à très basse température ; pour une telle utilisation, la Tg du TPE est plus préférentiellement encore inférieure ou égale à 10°C. De manière préférentielle également, la Tg du TPE est supérieure à -100°C.

Pour être de nature à la fois élastomère et thermoplastique, le TPE doit être muni de blocs suffisamment incompatibles (c'est-à-dire différents du fait de leur nature chimique, de leur polarité ou de leur Tg respectives) pour conserver leurs propriétés propres de bloc élastomère ou thermoplastique.

Les TPE peuvent être des copolymères avec un petit nombre de blocs (moins de 5, typiquement 2 ou 3), auquel cas ces blocs ont de préférence des masses élevées, supérieures à 15000 g/mol. Ces TPE peuvent être par exemple des copolymères diblocs, comprenant un bloc thermoplastique et un bloc élastomère. Ce sont souvent aussi des élastomères triblocs avec deux segments rigides reliés par un segment souple. Les segments rigides et souples peuvent être disposés linéairement, en étoile ou branchés. Typiquement, chacun de ces segments ou blocs contient souvent au minimum plus de 5, généralement plus de 10 unités de répétition (par exemple unités styrène et unités butadiène pour un copolymère blocs styrène/ butadiène/ styrène).

Les TPE peuvent aussi comprendre un grand nombre de blocs (plus de 30, typiquement de 50 à 500) plus petits, auquel cas ces blocs ont de préférence des masses peu élevées, par exemple de 800 à 5000 g/mol, ces TPE seront appelés TPE multiblocs par la suite, et sont un enchaînement blocs élastomères - blocs thermoplastiques.

Selon une première variante, le TPE se présente sous une forme linéaire. Par exemple, le TPE est un copolymère dibloc : bloc thermoplastique / bloc élastomère. Le TPE peut aussi être un copolymère tribloc : bloc thermoplastique / bloc élastomère / bloc thermoplastique, c'est-à-dire un bloc élastomère central et de deux blocs thermoplastiques terminaux, à chacune des deux extrémités du bloc élastomère. Egalement, le TPE multibloc peut être un enchaînement linéaire de blocs élastomères - blocs thermoplastiques.

Selon une autre variante de l'invention, le TPE utile pour les besoins de l'invention se présente sous une forme étoilée à au moins trois branches. Par exemple, le TPE peut alors se composer d'un bloc élastomère étoilé à au moins trois branches et d'un bloc thermoplastique, situé à l'extrémité de chacune des branches du bloc élastomère. Le nombre de branches de l'élastomère central peut varier, par exemple de 3 à 12, et de préférence de 3 à 6.

Selon une autre variante de l'invention, le TPE se présente sous une forme branchée ou dendrimère. Le TPE peut alors se composer d'un bloc élastomère branché ou dendrimère et d'un bloc thermoplastique, situé à l'extrémité des branches du bloc élastomère dendrimère.

Les blocs élastomères du TPE pour les besoins de l'invention, peuvent être tous les élastomères connus de l'homme de l'art. Ils possèdent généralement une Tg inférieure à 25°C, préférentiellement inférieure à 10°C, plus préférentiellement inférieure à 0°C et très préférentiellement inférieure à -10°C. De manière préférentielle également, la Tg bloc élastomère du TPE est supérieure à -100°C.

Pour les blocs élastomères à chaîne carbonée, si la partie élastomère du TPE ne comporte pas d'insaturation éthylénique, on parlera d'un bloc élastomère saturé. Si le bloc élastomère du TPE comporte des insaturations éthyléniques (c'est-à-dire des doubles liaisons carbone - carbone), on parlera alors d'un bloc élastomère insaturé ou diénique.

Un bloc élastomère saturé est constitué d'une séquence polymère obtenu par la polymérisation d'au moins un (c'est-à-dire un ou plusieurs) monomère éthylénique, c'est-à-dire comportant une double liaison carbone - carbone. Parmi les blocs issus de ces monomères éthyléniques, on peut citer les blocs polyalkylènes tels que les copolymères statistiques éthylène - propylène ou éthylène - butylène. Ces blocs élastomères saturés peuvent aussi être obtenus par hydrogénation de blocs élastomères insaturés.

Les blocs élastomères peuvent aussi être de blocs aliphatiques issus de la famille des polyéthers, des polyesters, ou des polycarbonates.

Des diènes conjugués en C4 - C14 peuvent être copolymérisés avec les monomères éthyléniques. Il s'agit dans ce cas de copolymères statistiques. De préférence, ces diènes conjugués sont choisis parmi l'isoprène, le butadiène, le 1-méthylbutadiène, le 2-méthylbutadiène, le 2,3-diméthyl-1,3-butadiène, le 2,4-diméthyl-1,3-butadiène, le 1,3-pentadiène, le 2-méthyl-1,3-pentadiène, le 3-méthyl-1,3-pentadiène, le 4-méthyl-1,3-pentadiène, le 2,3-diméthyl-1,3-pentadiène, le 1,3-hexadiène, le 2-méthyl-1,3-hexadiène, le 3-méthyl-1,3-hexadiène, le 4-méthyl-1,3-hexadiène, le 5-méthyl-1,3-hexadiène, le 2,3-diméthyl-1,3-hexadiène, le 2,4-diméthyl-1,3-hexadiène, le 2,5-diméthyl-1,3-hexadiène, le 2-neopentylbutadiène, le 1,3-cyclopentadiène, le 1,3-cyclohexadiène, 1-vinyl-1,3-cyclohexadiène ou leur mélange. Plus préférentiellement le diène conjugué est choisi parmi le butadiène ou l'isoprène ou un mélange contenant du butadiène et de l'isoprène.

Dans le cas des blocs élastomères insaturés, ce bloc élastomère du TPE est de préférence composé majoritairement d'une partie élastomère diénique. Par majoritairement, on entend un taux pondéral en monomère diénique le plus élevé par rapport au poids total du bloc élastomère, et de préférence un taux pondéral de plus de 50%, plus préférentiellement de plus de 75% et encore plus préférentiellement de plus de 85%. Alternativement, l'insaturation du bloc élastomère insaturé peut provenir d'un monomère comportant une double liaison et une insaturation de type cyclique, c'est le cas par exemple dans le polynorbornène.

Préférentiellement, des diènes conjugués en C4 - C14 peuvent être polymérisés ou copolymérisés pour constituer un bloc élastomère diénique. De préférence, ces diènes conjugués sont choisis parmi l'isoprène, le butadiène, le pipérylène, le 1-méthylbutadiène, le 2-méthylbutadiène, le 2,3-diméthyl-1,3-butadiène, le 2,4-diméthyl-1,3-butadiène, le 1,3-pentadiène, le 2-méthyl-1,3-pentadiène, le 3-méthyl-1,3-pentadiène, le 4-méthyl-1,3-pentadiène, le 2,3-diméthyl-1,3-pentadiène, le 2,5-diméthyl-1,3-pentadiène, le 2-méthyl-1,4-pentadiène, le 1,3-hexadiène, le 2-méthyl-1,3-hexadiène, le 2-méthyl-1,5-hexadiène, le 3-méthyl-1,3-hexadiène, le 4-méthyl-1,3-hexadiène, le 5-méthyl-1,3-hexadiène, le 2,5-diméthyl-1,3-hexadiène, le 2,5-diméthyl-2,4-hexadiène, le 2-néopentyl-1,3-butadiène, le 1,3-cyclopentadiène, le méthylcyclopentadiène, le 2-méthyl-1,6-heptadiène, le 1,3-cyclohexadiène, 1-vinyl-1,3-cyclohexadiène ou leur mélange. Plus préférentiellement le diène conjugué est l'isoprène ou le butadiène ou un mélange contenant de l'isoprène et/ou du butadiène.

Selon une variante, les monomères polymérisés pour former la partie élastomère du TPE peuvent être copolymérisés, de manière statistique, avec au moins un autre monomère de manière à former un bloc élastomère. Selon cette variante, la fraction molaire en monomère polymérisé autre qu'un monomère éthylénique, par rapport au nombre total de motifs du bloc élastomère, doit être telle que ce bloc garde ses propriétés d'élastomère. Avantageusement la fraction molaire de cet autre co-monomère peut aller de 0 à 50%, plus préférentiellement de 0 à 45% et encore plus préférentiellement de 0 à 40%.

A titre d'illustration, cet autre monomère susceptible de copolymériser avec le monomère premier peut être choisi parmi les monomères éthyléniques tels que définis précédemment (par exemple l'éthylène), les monomères diènes, plus particulièrement, les monomères diènes conjugués ayant 4 à 14 atomes de carbone tels que définis précédemment (par exemple le butadiène), les monomères de type vinylaromatiques ayant de 8 à 20 atomes de carbone tels que définis ci-après ou encore, il peut s'agir d'un monomère tel que l'acétate de vinyle).

Lorsque le co-monomère est de type vinylaromatique, il représente avantageusement une fraction en motifs sur le nombre total de motifs du bloc thermoplastique de 0 à 50%, préférentiellement allant de 0 à 45% et encore plus préférentiellement allant de 0 à 40%. A titre de composés vinylaromatiques conviennent notamment les monomères styréniques cités plus haut, à savoir les méthylstyrènes, le para-tertio-butylstyrène, les chlorostyrènes, les bromostyrènes, les fluorostyrènes ou encore le para-hydroxy-styrène. De préférence, le co-monomère de type vinylaromatique est le styrène.

On utilisera pour la définition des blocs thermoplastiques la caractéristique de température de transition vitreuse (Tg) du bloc rigide thermoplastique. Cette caractéristique est bien connue de l'homme du métier. Elle permet notamment de choisir la température de mise en oeuvre industrielle (transformation). Dans le cas d'un polymère (ou d'un bloc de polymère) amorphe, la température de mise en oeuvre est choisie sensiblement supérieure à la Tg du bloc thermoplastique. Dans le cas spécifique d'un polymère (ou d'un bloc de polymère) semi-cristallin, on peut observer une température de fusion alors supérieure à la température de transition vitreuse. Dans ce cas, c'est plutôt la température de fusion (Tf) qui permet de choisir la température de mise en oeuvre du polymère (ou bloc de polymère) considéré. Ainsi, par la suite, lorsqu'on parlera de « Tg (ou Tf, le cas échéant) », il faudra considérer qu'il s'agit de la température utilisée pour choisir la température de mise oeuvre.

Pour les besoins de l'invention, les élastomères TPE comprennent un ou plusieurs bloc(s) thermoplastique(s) ayant de préférence une Tg (ou Tf, le cas échéant) supérieure ou égale à 80°C et constitué(s) à partir de monomères polymérisés. Préférentiellement, ce bloc thermoplastique a une Tg (ou Tf, le cas échéant) comprise dans un domaine variant de 80°C à 250°C. De préférence, la Tg (ou Tf, le cas échéant) de ce bloc thermoplastique est préférentiellement de 80°C à 200°C, plus préférentiellement de 80°C à 180°C.

Les blocs thermoplastiques ayant une Tg (ou Tf, le cas échéant) supérieure ou égale à 80°C peuvent être constitués à partir de monomères polymérisés de diverses natures, notamment, ils peuvent constituer les blocs suivants ou leurs mélanges : les polyoléfines (polyéthylène, polypropylène) ; les polyuréthannes ; les polyamides ; les polyesters ; les polyacétals ; les polyéthers (polyoxyde d'éthylène, polyphénylène éther) ; les polysulfures de phénylène ; les polyfluorés (FEP, PFA, ETFE) ; les polystyrènes (détaillés ci-dessous) ; les polycarbonates ; les polysulfones ; le polyméthylméthacrylate ; le polyétherimide ; les copolymères thermoplastiques tels que le copolymère acrylonitrile-butadiène-styrène (ABS).

Les polystyrènes, préférés pour les blocs thermoplastiques des TPE, sont obtenus à partir de monomères styréniques. Par monomère styrénique doit être entendu dans la présente description tout monomère comprenant du styrène, non substitué comme substitué ; parmi les styrènes substitués peuvent être cités par exemple les méthylstyrènes (par exemple l'o-méthylstyrène, le m-méthylstyrène ou le p-méthylstyrène, l'alpha-méthylstyrène, l'alpha-2-diméthylstyrène, l'alpha-4-diméthylstyrène ou le diphényléthylène), le para-tertio-butylstyrène, les chlorostyrènes (par exemple l'o-chlorostyrène, le m-chlorostyrène, le p-chlorostyrène, le 2,4-dichlorostyrène, le 2,6-dichlorostyrène ou le 2,4,6-trichlorostyrène), les bromostyrènes (par exemple l'o-bromostyrène, le m-bromostyrène, le p-bromostyrène, le 2,4-dibromostyrène, le 2,6-dibromostyrène ou les 2,4,6-tribromostyrène), les fluorostyrènes (par exemple l'o-fluorostyrène, le m-fluorostyrène, le p-fluorostyrène, le 2,4-difluorostyrène, le 2,6-difluorostyrène ou les 2,4,6-trifluorostyrène) ou encore le para-hydroxy-styrène.

Selon un mode de réalisation préférentiel de l'invention, le taux pondéral de styrène, dans l'élastomère TPE, est compris entre 5% et 50%. En dessous du minimum indiqué, le caractère thermoplastique de l'élastomère risque de diminuer de manière sensible tandis qu'au-dessus du maximum préconisé, l'élasticité de la composition peut être affectée. Pour ces raisons, le taux de styrène est plus préférentiellement compris entre 10% et 40%.

Par exemple, le TPE est un copolymère dont la partie élastomère est saturée, et comportant des blocs styrènes et des blocs alkylènes. Les blocs alkylènes sont préférentiellement de l'éthylène, du propylène ou du butylène. Plus préférentiellement, cet élastomère TPE est choisi dans le groupe suivant, constitué de copolymères diblocs, triblocs linéaires ou étoilés : styrène/ éthylène/ butylène (SEB), styrène/ éthylène/ propylène (SEP), styrène/ éthylène/ éthylène/ propylène (SEEP), styrène/ éthylène/ butylène/ styrène (SEBS), styrène/ éthylène/ propylène/ styrène (SEPS), styrène/ éthylène/ éthylène/ propylène/ styrène (SEEPS), styrène/ isobutylène (SIB), styrène/ isobutylène/ styrène (SIBS) et les mélanges de ces copolymères.

Selon un autre exemple, le TPE est un copolymère dont la partie élastomère est insaturée, et qui comporte des blocs styrènes et des blocs diènes, ces blocs diènes étant en particulier des blocs isoprène ou butadiène. Plus préférentiellement, ce TPE est choisi dans le groupe suivant, constitué de copolymères diblocs, triblocs linéaires ou étoilés : styrène/ butadiène (SB), styrène/ isoprène (SI), styrène/ butadiène/ isoprène (SBI), styrène/ butadiène/ styrène (SBS), styrène/ isoprène/ styrène (SIS), styrène/ butadiène/ isoprène/ styrène (SBIS) et les mélanges de ces copolymères.

Par exemple également, le TPE est un copolymère linéaire ou étoilé dont la partie élastomère comporte une partie saturée et une partie insaturée comme par exemple le styrène/ butadiène/ butylène (SBB), le styrène/ butadiène/ butylène/ styrène (SBBS) ou un mélange de ces copolymères.

Parmi les TPE multiblocs, on peut citer les copolymères comportant des blocs copolymère statistique d'éthylène et de propylène/ polypropylène, polybutadiène/ polyuréthane (TPU), polyéther/ polyester (COPE), polyéther/ polyamide (PEBA).

A titre d'exemples d'élastomères TPE commercialement disponibles, on peut citer les élastomères de type SEPS, SEEPS, ou SEBS commercialisés par la société Kraton sous la dénomination "Kraton G" (e.g. produits G1650, G1651, G1654, G1730) ou la société Kuraray sous la dénomination "Septon" (e.g. « Septon 2007 », « Septon 4033 », « Septon 8004 ») ; ou les élastomères de type SIS commercialisés par Kuraray, sous le nom « Hybrar 5125 », ou commercialisés par Kraton sous le nom de « D1161 » ou encore les élastomères de type SBS linéaire commercialisés par Polimeri Europa sous la dénomination « Europrene SOLT 166 » ou SBS étoilé commercialisés par Kraton sous la dénomination « D1184 ». On peut également citer les élastomères commercialisés par la société Dexco Polymers sous la dénomination de « Vector » ( e.g. « Vector 4114 », « Vector 8508 »). Parmi les TPE multiblocs, on peut citer le TPE « Vistamaxx » commercialisé par la société Exxon ; le TPE COPE commercialisé par la société DSM sous la dénomination « Arnitel », ou par la société Dupont sous la dénomination « Hytrel », ou par la société Ticona sous la dénomination « Riteflex » ; le TPE PEBA commercialisé par la société Arkema sous la dénomination « PEBAX » ; le TPE TPU commercialisé par la société Sartomer sous la dénomination « TPU 7840 », ou par la société BASF sous la dénomination « Elastogran ».

De préférence pour l'invention, l'élastomère thermoplastique est choisi dans le groupe des élastomères thermoplastiques styréniques, c'est-à-dire dont le bloc thermoplastique est un bloc styrénique. Plus préférentiellement, le TPE est choisi dans le groupe des élastomères thermoplastiques styréniques insaturés, c'est-à-dire dont le bloc thermoplastique est un bloc styrénique et dont le bloc élastomérique est insaturé. Plus préférentiellement encore, le bloc élastomèrique du TPE est un polybutadiène, ou un copolymère statistique de butadiène et de styrène.

### Réticulation

Optionnellement, la composition du pneumatique de l'invention peut être réticulée par tout moyen connu de l'homme de l'art.

On peut notamment réticuler la composition par bombardement électronique tel que décrit dans le document WO2017/064091, ou encore au moyen d'un peroxyde organique tel que décrit dans le document WO2018/091510, ou encore par une vulcanisation au soufre telle que décrite dans le document WO2018/091514.

Ainsi de préférence, la composition comprend un système de réticulation. A ce titre, on peut utiliser tout type de système de réticulation connu de l'homme du métier pour les compositions de caoutchouc pour pneumatique. De manière préférée, le système de réticulation comprend du soufre ou un peroxyde organique.

Selon un mode de réalisation préféré, le système de réticulation est à base de soufre, on parle alors d'un système de vulcanisation. Le soufre peut être apporté sous toute forme, notamment sous forme de soufre moléculaire, ou d'un agent donneur de soufre. Au moins un accélérateur de vulcanisation est également préférentiellement présent, et, de manière optionnelle, préférentielle également, on peut utiliser divers activateurs de vulcanisation connus tels qu'oxyde de zinc, acide stéarique ou composé équivalent tels que les sels d'acide stéarique et sels de métaux de transition, dérivés guanidiques (en particulier diphénylguanidine), ou encore des retardateurs de vulcanisation connus. Le soufre est utilisé à un taux préférentiel compris entre 0,5 et 12 pce, en particulier entre 1 et 10 pce. L'accélérateur de vulcanisation est utilisé à un taux préférentiel compris entre 0,5 et 10 pce, plus préférentiellement compris entre 0,5 et 5,0 pce.

On peut utiliser comme accélérateur tout composé susceptible d'agir comme accélérateur de vulcanisation des élastomères diéniques en présence de soufre, notamment des accélérateurs du type thiazoles ainsi que leurs dérivés, des accélérateurs de types sulfénamides, thiurames, dithiocarbamates, dithiophosphates, thiourées et xanthates. A titre d'exemples de tels accélérateurs, on peut citer notamment les composés suivants : disulfure de 2-mercaptobenzothiazyle (en abrégé "MBTS"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), disulfure de tetrabenzylthiurame ("TBZTD"), dibenzyldithiocarbamate de zinc ("ZBEC") et les mélanges de ces composés.

Selon un autre mode de réalisation préféré, le système de réticulation comprend un peroxyde organique. De manière particulièrement préférée, le ou les peroxydes organiques utilisables selon l'invention sont choisis parmi les peroxydes de dialkyle tels que le peroxyde de ditertbutyle (DTBP) ; le peroxyde de dicumyle (Dicup); le peroxyde de tertbutylcumyle et le 2,5-diméthyl-2,5-di(tertbutylperoxy)hexane (DBPH), les peroxydes de diacyles tels que le peroxyde de bis(2,4-di-chlorobenzoyle) (DCBP-50) et le peroxyde de benzoyle (BP-50), les peroxydes d'acétals tels que l'éthyle 3,3-di-(t-butylpéroxy)butyrate), les peroxydes d'esters tels que le t-butyl peroxybenzoate et le OO-(t-butyl) O-(2-éthylhexyl) monoperoxycarbonate, les hydroperoxydes tels que le t-amyl hydroperoxyde, et les mélanges de ces composés. Le taux de peroxyde est de préférence compris dans un domaine allant de 0,1 à 10 pce, de préférence de 0,2 à 6 pce, plus préférentiellement de 0,5 à 5 pce.

### Charge renforçante

La composition de caoutchouc de l'invention peut comprendre une ou plusieurs charges renforçantes. On peut utiliser tout type de charge dite renforçante, connue pour ses capacités à renforcer une composition de caoutchouc utilisable notamment pour la fabrication de pneumatiques, par exemple une charge organique telle que du noir de carbone, une charge inorganique telle que de la silice ou encore un mélange de ces deux types de charges.

Comme noirs de carbone conviennent tous les noirs de carbone, notamment les noirs conventionnellement utilisés dans les pneumatiques ou leurs bandes de roulement. Parmi ces derniers, on citera plus particulièrement les noirs de carbone renforçants des séries 100, 200, 300, ou les noirs de série 500, 600 ou 700 (grades ASTM D-1765-2017), comme par exemple les noirs N115, N134, N234, N326, N330, N339, N347, N375, N550, N683, N772).

Ces noirs de carbone peuvent être utilisés à l'état isolé, tels que disponibles commercialement, ou sous tout autre forme, par exemple comme support de certains des additifs de caoutchouterie utilisés. Les noirs de carbone pourraient être par exemple déjà incorporés à un élastomère diénique, notamment isoprénique sous la forme d'un masterbatch (voir par exemple demandes WO97/36724-A2 ou WO99/16600-A1).

Comme exemple de charges organiques autres que des noirs de carbone, on peut citer les charges organiques de polyvinyle fonctionnalisé telles que décrites dans les demandes WO2006/069792-A1, WO2006/069793-A1, WO2008/003434-A1 et WO2008/003435-A1.

Par « charge inorganique renforçante », doit être entendu ici toute charge inorganique ou minérale, quelles que soient sa couleur et son origine (naturelle ou de synthèse), encore appelée charge « blanche », charge « claire » ou même charge « non-noire » par opposition au noir de carbone, capable de renforcer à elle seule, sans autre moyen qu'un agent de couplage intermédiaire, une composition de caoutchouc destinée à la fabrication de pneumatiques. De manière connue, certaines charges inorganiques renforçantes peuvent se caractériser notamment par la présence de groupes hydroxyle (OH) à leur surface.

Comme charges inorganiques renforçantes conviennent notamment des charges minérales du type siliceux, préférentiellement la silice (SiO2) ou du type alumineux, en particulier l'alumine (Al2O3). La silice utilisée peut être toute silice renforçante connue de l'homme du métier, notamment toute silice précipitée ou pyrogénée présentant une surface spécifique BET ainsi qu'une surface spécifique CTAB toutes deux inférieures à 450 m2/g, de préférence comprises dans un domaine allant de 30 à 400 m2/g, notamment de 60 à 300 m2/g.

À titre d'autres exemples de charges inorganiques susceptibles d'être utilisées dans les compositions de caoutchouc de l'invention peuvent être encore cités les charges minérales du type alumineux, en particulier de l'alumine (Al2O3), des oxydes d'aluminium, des hydroxydes d'aluminium, des aluminosilicates, des oxydes de titane, des carbures ou nitrures de silicium, tous du type renforçants tels que décrits par exemple dans les demandes WO99/28376-A2, WO00/73372-A1, WO02/053634-A1, WO2004/003067-A1, WO2004/056915-A2, US6610261-B1 et US6747087-B2.

L'état physique sous lequel se présente la charge inorganique renforçante est indifférent, que ce soit sous forme de poudre, de microperles, de granulés, ou encore de billes ou toute autre forme densifiée appropriée. Bien entendu on entend également par charge inorganique renforçante des mélanges de différentes charges inorganiques renforçantes, en particulier de silices telles que décrites ci-dessus.

L'homme du métier comprendra qu'en remplacement de la charge inorganique renforçante décrite ci-dessus, pourrait être utilisée une charge renforçante d'une autre nature, dès lors que cette charge renforçante d'une autre nature serait recouverte d'une couche inorganique telle que de la silice, ou bien comporterait à sa surface des sites fonctionnels, notamment hydroxyles, nécessitant l'utilisation d'un agent de couplage pour établir la liaison entre cette charge renforçante et l'élastomère diénique. À titre d'exemple, on peut citer des noirs de carbone partiellement ou intégralement recouverts de silice, ou des noirs de carbone modifiés par de la silice, tels que, à titre non limitatif, les charges de type « Ecoblack^{®} » de la série CRX2000 » ou de la série « CRX4000 » de la société Cabot Corporation.

L'homme du métier saura adapter le taux de charge renforçante total selon l'utilisation concernée, notamment selon le type de pneumatiques concerné, par exemple pneumatique pour moto, pour véhicule de tourisme ou encore pour véhicule utilitaire tel que camionnette ou poids lourd. De préférence, ce taux de charge renforçante total est compris dans un domaine allant de 10 à 200 pce, plus préférentiellement de 30 à 180 pce, et encore plus préférentiellement de 40 à 160 pce; l'optimum étant de manière connue différent selon les applications particulières visées.

Selon une variante de l'invention, la charge renforçante est majoritairement du noir de carbone, c'est-à-dire qu'elle comprend plus de 50% en poids de noir de carbone par rapport au poids total de charge renforçante. Selon une variante de l'invention, la charge renforçante consiste en du noir de carbone.

Selon une variante de l'invention, la composition ne contient pas de charge renforçante.

Pour les noirs de carbone, la surface spécifique STSA est déterminée selon la norme ASTM D6556-2016.

De préférence pour l'invention, la composition, lorsqu'elle comprend une charge, en comprend de 5 à 80 pce de noir de carbone, plus préférentiellement de 30 à 70 pce.

Le cas échéant, pour coupler la charge inorganique renforçante à l'élastomère diénique, on peut utiliser de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels. Par « bifonctionnel », on entend un composé possédant un premier groupe fonctionnel capable d'interagir avec la charge inorganique et un second groupe fonctionnel capable d'interagir avec l'élastomère diénique. Par exemple, un tel composé bifonctionnel peut comprendre un premier groupe fonctionnel comprenant un atome de silicium, le dit premier groupe fonctionnel étant apte à interagir avec les groupes hydroxyles d'une charge inorganique et un second groupe fonctionnel comprenant un atome de soufre, le dit second groupe fonctionnel étant apte à interagir avec l'élastomère diénique.

### Autres additifs possibles

La composition du pneumatique selon l'invention peuvent comprendre optionnellement également tout ou partie des additifs usuels habituellement utilisés dans les compositions d'élastomères destinées notamment à la fabrication de pneumatiques, comme par exemple des charges non renforçantes, des pigments, des agents de protection tels que cires anti-ozone, anti-ozonants chimiques, anti-oxydants, des agents plastifiants, des agents anti-fatigue, des résines renforçantes, des accepteurs (par exemple résine phénolique novolaque) ou des donneurs de méthylène (par exemple HMT ou H3M).

Il va de soi que l'invention concerne les compositions de caoutchouc précédemment décrites tant à l'état dit "cru" ou non réticulé (i.e., avant cuisson) qu'à l'état dit "cuit" ou réticulé, ou encore vulcanisé (i.e., après réticulation ou vulcanisation).

### Préparation des couches du pneumatique selon l'invention

Lorsque la quantité de poudrette est supérieure à 80% en masse de la composition du pneumatique de l'invention, la préparation de cette couche peut être faite par frittage de poudrette.

Par frittage de poudrette de caoutchouc, on comprend une étape de mise en forme d'une quantité prédéterminée de poudrette par chauffage à une température élevée et en même temps de mise en pression de cette quantité de poudrette dans la cavité d'un moule. L'étape de frittage de la poudrette a lieu dans un moule et, de préférence sans ajout d'additif de vulcanisation. Plus particulièrement, il s'agit d'un frittage en phase solide des grains de poudrette, autrement dit, d'une cohésion des grains par chauffage à une température élevée d'un compactage des grains de poudrette de caoutchouc mis sous pression. Le chauffage et la mise en pression de la poudrette créent un agglomérat compact fritté de particules de poudrette. Ainsi, la compression crée un rapprochement physique des particules et le chauffage favorise la mobilité moléculaire et donc ce rapprochement via l'interpénétration des chaînes élastomère des poudrettes. Sous l'effet de la température, il peut également y avoir des scissions de chaînes élastomère notamment à la surface des poudrettes. Ces chaînes élastomères se recombinent entre elles pour créer des liaisons chimiques entre les grains de poudrette de caoutchouc, et assurer la cohésion du matériau.

De préférence, la poudrette et l'élastomère thermoplastique sont introduits dans le moule et soumis à une température nominale comprise entre 100°C et 210°C, de préférence de 150°C à 200°C, et à une pression nominale comprise entre 20 et 200 bars pendant une période de temps comprise entre 2 et 15 minutes.

On obtient ainsi un profilé de caoutchouc dont la forme et les dimensions sont définies par celles de la cavité de frittage du moule, et dont la densité est contrôlée, celle-ci étant en lien direct avec la pression de compactage de la poudrette. Ces produits peuvent ensuite être utilisés pour la fabrication de semi-finis pour la fabrication de pneumatiques, selon les techniques connues de l'homme du métier.

Le frittage décrit ci-dessus peut ainsi être utilisé lorsque le taux de poudrette est supérieur à 80% en masse, en présence de 20% d'autres ingrédients tels que les élastomères thermoplastiques.

La préparation de la composition du pneumatique de l'invention peut également être faite par les moyens habituels de l'homme du métier pour la préparation des compositions de caoutchouc. Notamment, les compositions peuvent être fabriquées dans des mélangeurs appropriés, en mettant en oeuvre une phase de travail ou malaxage thermo-mécanique à une température supérieure à la température Tg ou Tf des blocs du TPE. La composition peut également être obtenue par extrusion-mélangeage à une température supérieure à la température Tg ou Tf des blocs du TPE.

Une telle méthode de préparation peut par exemple être utilisée pour des compositions comprenant, en masse, de 50% à 95% de poudrette, préférentiellement de 50% à 90% et notamment de 50% à 85%.

Dans le cas où un système de réticulation est inclus dans la composition, la phase de travail thermomécanique précédemment décrite peut être suivie d'une deuxième phase de travail mécanique (parfois qualifiée de phase "productive") à plus basse température, typiquement inférieure à 110°C, phase de finition au cours de laquelle est incorporé le système de réticulation.

La composition finale ainsi obtenue peut ensuite être calandrée, par exemple sous la forme d'une feuille ou d'une plaque, notamment pour une caractérisation au laboratoire, ou encore extrudée, pour former par exemple un profilé de caoutchouc utilisé pour la fabrication de semi-finis pour pneumatiques. Ces produits peuvent ensuite être utilisés pour la fabrication de pneumatiques, selon les techniques connues de l'homme du métier.

Les exemples qui suivent illustrent l'invention sans toutefois la limiter.

### Exemples de réalisation de l'invention

### Caractérisation des poudrettes et des compositions de caoutchouc des exemples

Dans les exemples, les poudrettes de caoutchouc sont caractérisées comme indiqué ci-après.

### Mesure de la taille des particules:

La taille des particules (notamment le D50) peut être mesurée par granulométrie laser de type mastersizer 3000 de la société Malverne. La mesure est réalisée en voie liquide, dispersés dans l'alcool après un traitement préalable de 1min d'ultra-sons afin de garantir la dispersion des particules. La mesure est réalisée conformément à la norme ISO-13320-1.

### Mesure de l'extrait acétonique:

Le taux d'extrait acétonique est mesuré selon la norme ISO1407, au moyen d'un extracteur de type soxhlet.

Une prise d'essai d'échantillon (entre 500 mg et 5g) est introduite dans une cartouche d'extraction puis placée dans le tube extracteur du soxhlet. Un volume d'acétone égal à deux ou trois fois le volume du tube extracteur est placé dans le collecteur du soxhlet. Le soxhlet est ensuite assemblé puis mis à chauffer durant 16h.

L'échantillon est pesé après extraction. Le taux d'extrait acétonique correspond à la perte de masse de l'échantillon durant l'extraction, rapportée à sa masse initiale.

### Mesure de l'extrait chloroformique:

Le taux d'extrait chloroformique est mesuré selon la norme ISO1407, au moyen d'un extracteur de type soxhlet.

Une prise d'essai d'échantillon (entre 500 mg et 5g) est introduite dans une cartouche d'extraction puis placée dans le tube extracteur du soxhlet. Un volume de chloroforme égal à deux ou trois fois le volume du tube extracteur est placé dans le collecteur du soxhlet. Le soxhlet est ensuite assemblé puis mis à chauffer durant 16h.

L'échantillon est pesé après extraction. Le taux d'extrait chloroformique correspond à la perte de masse de l'échantillon durant l'extraction, rapportée à sa masse initiale.

### Mesure des masses moléculaires moyennes de l'extrait chloroformique:

Les masses moléculaires sont déterminées par chromatographie d'exclusion stérique, selon un étalonnage de Moore et selon la norme ISO16014.

La mesure de la masse moléculaire moyenne en poids (Mw) de l'extrait chloroformique est réalisée par chromatographie d'exclusion stérique (SEC) avec un détecteur à indice de réfraction (RI). Le système est composé d'une chaîne Alliance 2695 de chez Waters, d'un four à colonne de chez Waters ainsi que d'un détecteur RI 410 de chez Waters. Le jeu de colonnes utilisé est composé de 2 colonnes PL GEL MIXED D (300 × 7,5 mm 5µm) suivies de 2 colonnes PL GEL MIXED E (300 × 7,5 mm 3µm) de la société Agilent. Ces colonnes sont placées dans un four à colonnes thermostaté à 35°C. La phase mobile utilisée est du tétrahydrofurane non antioxydé. Le débit de la phase mobile est de 1ml/min. Le détecteur RI est également thermostaté à 35°C.

L'extrait chloroformique est séché sous flux d'azote. L'extrait sec est ensuite repris à 1g/l dans le tétrahydrofurane non antioxydé à 250 ppm pendant 2 heures sous agitation. La solution obtenue est filtrée à l'aide d'une seringue et d'un filtre seringue 0,45µm en PTFE à usage unique. 100 µl de la solution filtrée est injecté dans le système chromatographique conditionné à 1ml/min et 35°C.

Les résultats de Mw sont fournis par intégration des pics chromatographiques détectés par détecteur RI au-delà d'une valeur de 2000g/mol. La Mw est calculée à partir d'une calibration réalisée à l'aide de polystyrènes étalons.

### Mesure de la fraction massique de noir de carbone :

La mesure de la fraction massique de noir de carbone est faite par une analyse thermogravimétrique (ATG) selon la norme NF T-46-07, sur un appareil de la société Mettler Toledo modèle « TGA/DSC1 ». Environ 20 mg d'échantillon est introduit dans l'analyseur thermique, puis soumis à un programme thermique de 25 à 600°C sous atmosphère inerte (phase pyrolysable) puis de 400 à 750°C sous atmosphère oxydante (phase oxydable). La masse de l'échantillon est mesurée en continu tout au long du programme thermique. Le taux de noir correspond à la perte de masse mesurée lors de la phase oxydable rapportée à la masse d'échantillon initiale.

Dans les exemples, les compositions de caoutchouc sont caractérisées avant et/ou après cuisson comme indiqué ci-après.

### Propriétés dynamiques (après cuisson):

Les propriétés dynamiques et en particulier le tan(δ)max sont mesurées sur un viscoanalyseur (Metravib V A4000), selon la norme ASTM D 5992 - 96. On enregistre la réponse d'un échantillon de composition vulcanisée (éprouvette cylindrique de 4 mm d'épaisseur et de 400 mm2 de section), soumis à une sollicitation sinusoïdale en cisaillement simple alterné, à la fréquence de 10Hz, à 23°C, selon la norme ASTM D 1349 - 99. On effectue un balayage en amplitude de déformation crête à crête de 0,1 à 50% (cycle aller), puis de 50% à 1 % (cycle retour). Le résultat exploité est le facteur de perte (tan delta). Pour le cycle retour, on indique la valeur maximale de tan d observée (tan(delta)max)). Pour la valeur de tan(delta)max à 23°C, plus la valeur est basse, plus la composition aura une hystérèse faible et donc un résistance au roulement faible.

### Compositions de caoutchouc

La composition selon l'invention est fabriquée par extrusion-mélangeage à une température de 160°C. Alternativement, les compositions pourraient être préparées dans un mélangeur interne également à la température de 160°C ou par frittage comme décrit plus haut. La composition témoin est fabriquée avec une introduction de l'ensemble des constituants (sauf les ingrédients de réticulation) sur un mélangeur interne, avec une phase de travail thermomécanique jusqu'à une température de 130°C, une phase d'introduction du système de vulcanisation à une température inférieure, et une phase de cuisson à 150°C.

Les exemples présentés dans le tableau 1 ont pour objet de comparer l'hystérèse d'une composition non conforme (T1) à celle d'une composition conforme à l'invention (C1). Les quantités des ingrédients des compositions sont indiquées en % massique.

Les tan(delta)max à 23°C mesurés pour toutes les compositions sont indiqués à la dernière ligne du tableau 1, et l'on peut observer que l'hystérèse de la composition conforme à l'invention est améliorée par rapport à la composition non conforme, signe d'une résistance au roulement diminuée en pneumatique.

**[Tableau 1]**

| Composition | T1 | C1 |
|---|---|---|
| NR (1) %m | 16,4 | 0 |
| SBS (2) %m | 0 | 14,8 |
| Soufre %m | 0,8 | 0,5 |
| CBS %m | 0,8 | 0,8 |
| ZnO %m | 0,3 | 0 |
| Acide Stéarique %m | 0,3 | 0 |
| Poudrette (3) %m | 81,4 | 83,9 |
| *Tan(delta)max 23°C* | *0,24* | *0,13* |

Références du tableau 1 :
(1) NR : Caoutchouc naturel
(2) SBS « DX1000-A » de la société Kraton
(3) Poudrette « RNM60 » de la société Rubber Ressources, qui présente un taux d'extrait acétonique de 7,4% et un taux d'extrait chloroformique de 8,2% et un D50 de 209 µm.

## Revendications

1. Pneumatique comprenant une composition de caoutchouc à base d'au moins une poudrette de caoutchouc et un élastomère thermoplastique ladite poudrette de caoutchouc représentant 50% en masse ou plus de la composition, et présentant un ratio de l'extrait chloroformique sur l'extrait acétonique inférieur à 2 ; les extraits chloroformique et acétonique étant exprimés en pourcentages massiques et mesurés selon la norme ISO1407, au moyen d'un extracteur de type soxhlet.

2. Pneumatique selon la revendication 1 dans lequel la poudrette de caoutchouc est présente à un taux compris dans un domaine allant de 50% à 95% en masse, préférentiellement de 60% à 90% et plus préférentiellement de 70% à 90%.

3. Pneumatique selon l'une quelconque des revendications précédentes dans lequel la poudrette de caoutchouc présente un ratio de l'extrait chloroformique sur l'extrait acétonique inférieur ou égal à 1,5.

4. Pneumatique selon l'une quelconque des revendications précédentes dans lequel la poudrette présente un extrait acétonique compris entre 3 et 15 % en masse, plus préférentiellement compris dans un domaine allant de 3 à 10 % en masse.

5. Pneumatique selon l'une quelconque des revendications précédentes dans lequel la poudrette présente un extrait chloroformique compris entre 3 et 20% en masse, plus préférentiellement compris dans un domaine allant de 5 à 15 % en masse.

6. Pneumatique selon l'une quelconque des revendications précédentes dans lequel la poudrette présente une taille moyenne de particules (D50) comprise entre 10 et 400 µm, préférentiellement entre 50 et 250 µm et plus préférentiellement entre 70 et 220 µm.

7. Pneumatique selon l'une quelconque des revendications précédentes dans lequel l'élastomère thermoplastique est choisi dans le groupe des élastomères thermoplastiques styréniques, de préférence dans le groupe des élastomères thermoplastiques styréniques insaturés.

8. Pneumatique selon la revendication précédente, dans lequel le bloc élastomèrique de l'élastomère thermoplastique est un polybutadiène, ou un copolymère statistique de butadiène et de styrène.

9. Pneumatique selon l'une quelconque des revendications précédentes dans lequel la composition comprend en outre un système de réticulation comprenant du soufre ou un peroxyde organique.

10. Pneumatique selon l'une quelconque des revendications précédentes dans lequel la composition comprend en outre une charge renforçante.

## Patentansprüche

1. Reifen, umfassend eine Kautschukzusammensetzung auf Basis von mindestens einem Kautschukgranulat und einem thermoplastischen Elastomer, wobei das Kautschukgranulat 50 Massen-% oder mehr der Zusammensetzung ausmacht und ein Verhältnis von Chloroform-Extrakt zu Aceton-Extrakt von weniger als 2 aufweist; wobei die Chloroform- und Aceton-Extrakte in Massenprozent ausgedrückt sind und gemäß der Norm ISO1407 mit Hilfe eines Soxhlet-Extraktors gemessen werden.

2. Reifen nach Anspruch 1, wobei das Kautschukgranulat in einem Gehalt in einem Bereich von 50 bis 95 Massen-%, bevorzugt 60 bis 90 % und weiter bevorzugt 70 bis 90 %, vorliegt.

3. Reifen nach einem der vorhergehenden Ansprüche, wobei das Kautschukgranulat ein Verhältnis von Chloroform-Extrakt zu Aceton-Extrakt kleiner als oder gleich 1,5 aufweist.

4. Reifen nach einem der vorhergehenden Ansprüche, wobei das Granulat einen Aceton-Extrakt zwischen 3 und 15 Massen-%, weiter bevorzugt in einem Bereich von 3 bis 10 Massen-%, aufweist.

5. Reifen nach einem der vorhergehenden Ansprüche, wobei das Granulat einen Chloroform-Extrakt zwischen 3 und 20 Massen-%, weiter bevorzugt in einem Bereich von 5 bis 15 Massen-%, aufweist.

6. Reifen nach einem der vorhergehenden Ansprüche, wobei das Granulat eine mittlere Teilchengröße (D50) zwischen 10 und 400 µm, bevorzugt zwischen 50 und 250 µm und weiter bevorzugt zwischen 70 und 220 µm aufweist.

7. Reifen nach einem der vorhergehenden Ansprüche, wobei das thermoplastische Elastomer aus der Gruppe der thermoplastischen Styrolelastomere, bevorzugt aus der Gruppe der ungesättigten thermoplastischen Styrolelastomere, ausgewählt ist.

8. Reifen nach dem vorhergehenden Anspruch, wobei es sich bei dem elastomeren Block des thermoplastischen Elastomers um ein Polybutadien oder ein statistisches Copolymer von Butadien und Styrol handelt.

9. Reifen nach einem der vorhergehenden Ansprüche, wobei die Zusammensetzung außerdem ein Vernetzungssystem umfasst, das Schwefel oder ein organisches Peroxid umfasst.

10. Reifen nach einem der vorhergehenden Ansprüche, wobei die Zusammensetzung außerdem einen verstärkenden Füllstoff umfasst.

## Claims

1. A tire comprising a rubber composition based on at least a rubber crumb and a thermoplastic elastomer, said rubber crumb representing 50% by mass or more of the rubber composition, and exhibiting a ratio of the chloroform extract to the acetone extract of less than 2; the chloroform and acetone extracts being expressed as percentages by mass and measured according to the ISO1407 standard, by means of a Soxhlet-type extractor.

2. The tire as claimed in claim 1, wherein the rubber crumb is present at a content within a range extending from 50% to 95% by mass, preferentially from 60% to 90% and more preferentially from 70% to 90%.

3. The tire as claimed in either one of the preceding claims, wherein the rubber crumb exhibits a ratio of the chloroform extract to the acetone extract of less than or equal to 1.5.

4. The tire as claimed in any one of the preceding claims, wherein the rubber crumb has an acetone extract of between 3% and 15% by mass, more preferentially within a range extending from 3% to 10% by mass.

5. The tire as claimed in any one of the preceding claims, wherein the rubber crumb has a chloroform extract of between 3% and 20% by mass, more preferentially within a range extending from 5% to 15% by mass.

6. The tire as claimed in any one of the preceding claims, wherein the rubber crumb exhibits an average particle size (D50) of between 10 and 400 µm, preferentially between 50 and 250 µm and more preferentially between 70 and 220 µm.

7. The tire as claimed in any one of the preceding claims, wherein the thermoplastic elastomer is selected from the group of thermoplastic styrene elastomers, preferably from the group of unsaturated thermoplastic styrene elastomers.

8. The tire as claimed in the preceding claim, wherein the elastomeric block of the thermoplastic elastomer is a polybutadiene or a random copolymer of butadiene and styrene.

9. The tire as claimed in any one of the preceding claims, wherein the rubber composition further comprises a crosslinking system comprising sulfur or an organic peroxide.

10. The tire as claimed in any one of the preceding claims, wherein the composition further comprises a reinforcing filler.
